# EUROPÄISCHE PATENTSCHRIFT

(11) **EP 4 458 569 B1**
(45) Veröffentlichungstag und Bekanntmachung des Hinweises auf die Patenterteilung: **03.12.2025**
(21) Anmeldenummer: 23215853.5
(22) Anmeldetag: 12.12.2023
(51) Int. Cl.: B29D 30/16, B29D 30/30, B29D 30/60, B60C 9/22, B29D 30/52, B60C 9/20

(54) **FAHRZEUGREIFEN UND VERFAHREN ZUR HERSTELLUNG EINER GÜRTELBANDAGE**
VEHICLE TYRE AND METHOD FOR PRODUCING A BELT BANDAGE
BANDAGE PNEUMATIQUE POUR VÉHICULE ET PROCÉDÉ DE FABRICATION D'UN BANDAGE DE CEINTURE

(30) Priorität: 03.05.2023 DE 102023204084
(43) Veröffentlichungstag der Anmeldung: 06.11.2024
(73) Patentinhaber: Continental Reifen Deutschland GmbH, 30175 Hannover (DE)
(72) Erfinder: Würger, Marco, 30173 Hannover (DE); Wenckel, Mathias, 30173 Hannover (DE); Wieting, Steffen Julius, 30173 Hannover (DE)
(74) Vertreter: Continental Corporation

(56) Entgegenhaltungen:
- CN-A- 1 646 334
- DE-A1- 102007 004 327
- DE-T5- 112020 005 755
- JP-A- 2005 041 055
- JP-A- 2013 193 580

## Beschreibung

Die Erfindung betrifft einen Fahrzeugreifen mit einer Spulbandage, wobei die Spulbandage in eine Gummimischung eingebettete Festigkeitsträger umfasst, wobei die Gummimischung in einem ersten Abschnitt der Spulbandage elektrisch nicht leitfähig ist.

Es ist zunehmend üblich, zur Verringerung eines Rollwiderstandes von Fahrzeugreifen rollwiderstandsarme Gummimischungen einzusetzen, wobei die rollwiderstandsarmen Gummimischungen oft einen höheren spezifischen elektrischen Widerstand aufweisen als herkömmliche Gummimischungen. Üblich ist beispielsweise, als Füllstoff in einer Gummimischung Silica anstelle von Ruß zu verwenden, wodurch ein vorteilhaft niedriger Rollwiderstand erreicht werden kann, jedoch ein hoher elektrischer Widerstand zwischen Fahrbahnuntergrund und Felge entstehen kann.

Es gilt somit, elektrische Brücken im Fahrzeugreifen herzustellen, die beispielsweise auch eine zwischen Fahrbahnuntergrund und Felge angeordnete Spulbandage überwinden müssen, wenn die Spulbandage einen zu hohen elektrischen Widerstand aufweist. EP 3 325 286 B1 sieht hierzu einen Fahrzeugreifen mit einem Laufstreifen vor, wobei der Laufstreifen eine Laufstreifenkappe mit Lauffläche, eine Laufstreifenbasis und mindestens einen elektrisch leitenden Leitfähigkeitsstreifen umfasst, wobei der Leitfähigkeitsstreifen in radialer Richtung von der Laufstreifenbasis bis zur Lauffläche reicht. Der Fahrzeugreifen gemäß EP 3 325 286 B1 umfasst weiterhin eine unter der Laufstreifenbasis angeordnete, elektrisch nichtleitende Gürtelbandage mit einer Vielzahl von Lücken. Die Laufstreifenbasis besteht aus einem elektrisch leitenden Material und die Lücken in der Gürtelbandage sind mit demselben elektrisch leitenden Material gefüllt, aus dem die Laufstreifenbasis besteht. Ein Nachteil bei dem beschriebenen Stand der Technik ist, dass die Festigkeit durch die Lücken der Gürtelbandage verringert ist, was sich insbesondere bei hohen Rollgeschwindigkeiten negativ auf die Integrität und Performance eines Fahrzeugreifens auswirken kann.

DE 10 2007 004327 A1 beschreibt einen Reifen mit einer elektrisch leitfähigen Laufstreifenbase und einer elektrisch nicht leitfähigen Laufstreifencap, wobei die Cap durch Spulen eines Materialstreifens hergestellt wird, wobei im Laufstreifen lokal elektrisch leitfähiges Material eingebracht wird, welches zwischen der Außenseite der Cap und der Base eine elektrisch leitfähige Verbindung herstellt und wobei das elektrisch leitfähige Material während des Spulens, vor dem Auflegen des Capstreifens, auf zumindest eine Seite des Capstreifens aufgebracht wird. JP 2013 193580 A beschreibt einen Reifen mit einem Durchgangsbereich, der einen Laufstreifen durchdringt, wobei der Durchgangsbereich einen nicht leitfähigen Deckgummi und leitfähige Korde umfasst, wobei ein Ende der Korde an der Laufstreifenoberfläche und das andere Ende auf der Innenfläche des Laufstreifens freiliegt. CN 1 646 334 A beschreibt einen Reifen mit einer Gürtelverstärkungsschicht, umfassend Verstärkungskord in Form einer Polyethylen-2,6-naphthylester Faserlinie.

DE 11 2020 005755 T5 beschreibt einen Reifen mit einer Gürteldeckschicht, die organische Faserkordfäden einschließt. JP 2005 041055 A beschreibt einen Reifen mit einem aufgespulten Gummistreifen niedriger Leitfähigkeit, wobei hochleitfähiges Material diskontinuierlich an mehreren Stellen eingeschlossen ist, sodass dieses mit der Straßenoberfläche in Kontakt kommt.

Der Erfindung liegt die Aufgabe zugrunde, einen Fahrzeugreifen mit einer Gürtelbandage zu schaffen, die zu einem möglichst niedrigen Rollwiderstand des Fahrzeugreifens beitragen soll, wobei auch der elektrische Leitwert und die Festigkeit des Fahrzeugreifens auf einem hohen Niveau gehalten werden sollen. Außerdem soll ein Verfahren zur Herstellung einer Gürtelbandage in einem solchen Fahrzeugreifen geschaffen werden.

Die gestellte Aufgabe wird erfindungsgemäß dadurch gelöst, dass die Gummimischung in einem zweiten Abschnitt der Spulbandage elektrisch leitfähig ist.

Durch die Erfindung wird der Zielkonflikt zwischen einem geringem Rollwiderstand, einem ausreichenden elektrischen Leitwert und großer Festigkeit auf hohem Niveau sowie auf überraschend einfache Weise gelöst. Durch die Gestaltung der Gürtelbandage als Spulbandage lassen sich Abschnitte mit verschiedenen Eigenschaften, insbesondere in Bezug auf Hysterese und elektrische Leitfähigkeit aufspulen. Dadurch, dass in der gesamten Gürtelbandage Festigkeitsträger enthalten sind und für die unterschiedlichen Abschnitte nur eine die Festigkeitsträger ummantelnde Gummimischung angepasst wird, kann die Festigkeit über den gesamten Umfang und die gesamte Quererstreckung des Fahrzeugreifens auf einem hohen und einheitlichen Niveau gehalten werden.

Sofern die Richtungsbezeichnungen axial, in Axialrichtung, radial, in Radialrichtung und in Umfangsrichtung verwendet werden, beziehen sich diese auf den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 180° Umdrehung des Fahrzeugreifens früher einen minimalen Abstand zum Fahrbahnuntergrund als eine in Umfangsrichtung hintere Position. Die Axialrichtung bezieht sich auf eine Richtung parallel zur Drehachse. Axial nach innen zeigend bezieht sich dabei auf eine Orientierung, die einer Reifenäquatorebene bzw. einer Reifenäquatorlinie axial zugewandt ist. Die Reifenäquatorebene ist eine zur Rotationsachse des Fahrzeugreifens senkrechte Ebene, welche durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Die mit den Merkmalen des Hauptanspruchs erzielten Effekte werden durch bevorzugte Ausführungsformen und Ausgestaltungen unterstützt und weiter verstärkt.

Eine Spulbandage ist eine aus einer aufzuspulenden Länge über einen Gürtelverband gespulte Gürtelbandage. Die Spulbandage beinhaltet Festigkeitsträger, welche die aufzuspulende Länge vorzugsweise als entlang der Längsrichtung der aufzuspulenden Länge zusammenhängende Korde durchlaufen und beispielsweise aus Aramid, Nylon, PET oder Mischungen dieser Materialien bestehen können.

Ein Abschnitt der Spulbandage ist vorzugsweise ein lückenlos zusammenhängender Abschnitt, der sich vorzugsweise wenigstes in einem axialen Teilabschnitt über den gesamten Umfang und insgesamt über einen Teil der axialen Breite der Spulbandage erstreckt. Alternativ kann ein Abschnitt aber prinzipiell auch Lücken aufweisen und/oder mehrere nicht direkt zusammenhängende Bereiche der Spulbandage umfassen. Es sind auch solche Ausführungsformen von der Erfindung umfasst, gemäß denen ein Abschnitt der Spulbandage in Abhängigkeit von der Umfangsposition in variierenden axialen Bereichen angeordnet ist. In radialer Richtung kann die Spulbandage einen zusammenhängenden Abschnitt und/oder zwei oder mehr radial übereinandergestapelte Abschnitte umfassen, wobei die radiale Struktur der Spulbandage in Abhängigkeit von der Umfangsposition und/oder der Position in Axialrichtung variieren kann.

Eine Definition einer elektrisch leitfähigen bzw. nicht elektrisch leitfähigen Gummimischung ist zunächst relativ zu formulieren, dahingehend, dass ein spezifischer Widerstand nach Vulkanisation in der elektrisch leitfähigen Gummimischung kleiner ist als in der elektrisch nicht leitfähigen Gummimischung. Eine Grenze zwischen elektrisch leitfähiger und nicht leitfähiger Gummimischung kann in absoluten Zahlen dahingehend ausgedrückt werden, dass eine elektrisch leitfähige Gummimischung vorzugsweise einen spezifischen Widerstand von <1 × 10⁷ Ω cm bis < 1 × 10¹² Ω cm aufweist und dass eine elektrisch nicht leitfähige Gummimischung vorzugsweise einen spezifischen Widerstand von >1 x 10⁷ Ω cm bis > 1 × 10¹² Ω cm aufweist, wobei der spezifische Widerstand der elektrisch leitfähigen Gummimischung kleiner als jener der elektrisch nicht leitfähigen Gummimischung ist. Die große Spanne der angegebenen Grenzwerte ergibt sich unter anderem aus der Variationsmöglichkeit der Geometrien von in einem Fahrzeugreifen einsetzbaren Baugruppen: Je dicker beispielsweise die Spulbandage in dem zweiten Abschnitt ist, desto kleiner muss der spezifische Widerstand der leitfähigen Gummimischung sein, um einen gegebenen Widerstand zum Überwinden der Spulbandage nicht zu überschreiten; je größer beispielsweise die Kontaktfläche zwischen dem zweiten Abschnitt der Spulbandage und einem sich durch Cap und Base eines Laufstreifens erstreckenden Carbon Center Beam ist, desto größer darf der spezifische Widerstand der leitfähigen Gummimischung sein, um einen gegebenen Widerstand auf einem Weg zwischen Fahrbahn und Felge noch unterschreiten zu können. Alternativ oder zusätzlich kann der konkrete Anwendungsfall der Erfindung Auswirkungen auf sinnvolle Grenzwerte zur Definition einer elektrisch leitfähigen bzw. nicht leitfähigen Gummimischung haben. Beispielsweise darf der Ableitwiderstand eines Reifens, der nach WDK Norm 110/ISO 16392 als leitfähig eingestuft ist, einen Wert von 1 × 10⁶ Ω nicht überschreiten; für diesen Fall weist die elektrisch leitfähige Gummimischung vorzugsweise einen spezifischen Widerstand von < 1 × 10⁷ Ω cm auf. Beispielsweise ist für die Erstausstattung von Fahrzeugen, beispielsweise auf dem europäischen Markt, ein Grenzwert des Widerstands zwischen Fahrbahn und Felge von 1 × 10⁸ Ω üblich; in diesem Fall weist die elektrisch leitfähige Gummimischung vorzugsweise einen spezifischen Widerstand von < 1 × 10¹⁰ Ω cm auf. Beispielsweise darf der Ableitwiderstand eines Reifens, der nach WDK Norm/ISO 16392 als "dissipativ" eingestuft ist, einen Wert von 1 × 10¹⁰ Ω nicht überschreiten; in diesem Fall weist die elektrisch leitfähige Gummimischung vorzugsweise einen spezifischen Widerstand von < 1 × 10¹² Ω cm auf.

Vorzugsweise zeichnet sich die Gummimischung in dem ersten Abschnitt durch eine geringe Hysterese aus. Vorzugsweise wird mit der Gummimischung in dem ersten Abschnitt eine bessere Eignung zur Minimierung des Rollwiderstands des Fahrzeugreifens erzielt als mit der Gummimischung in dem zweiten Abschnitt. Auf diese Weise kann der erste Abschnitt auf einen guten Rollwiderstand und der zweite Abschnitt auf elektrische Leitfähigkeit optimiert werden, wobei kraft der durch beide Abschnitte verlaufenden Festigkeitsträger eine durchgehend hohe Festigkeit in beiden Abschnitten gegeben ist. Ein geeigneter Füllstoff für die Gummimischung in dem ersten Abschnitt ist Silica.

Gemäß einer bevorzugten Ausführungsform ist die Gummimischung zusätzlich in einem dritten Abschnitt elektrisch nicht leitfähig, wobei der zweite Abschnitt zu je einer axialen Seite von dem ersten bzw. dem dritten Abschnitt begrenzt wird. Der Ausdruck des Begrenzens zu einer axialen Seite bedeutet in diesem Zusammenhang, dass wenigstens in einem Teilbereich entlang der Umfangsrichtung ein bündiges Aneinandergrenzen und/oder ein teilweiser Überlapp zwischen wenigstens jeweils einer Wicklung des ersten bzw. des dritten Abschnitts auf der einen Seite und des zweiten Abschnitts auf der anderen Seite vorliegt. Insbesondere können der erste und dritte Abschnitt in den Schulterregionen und der zweite Abschnitt in der Reifenäquatorgegend des Fahrzeugreifens angeordnet sein, wobei die Reifenäquatorebene vorzugsweise den zweiten Abschnitt schneidet. Dies kann unter anderem deshalb vorteilhaft sein, weil es insbesondere in den Schulterregionen bei hohen Geschwindigkeiten zu starker Wärmeentwicklung bedingt durch Hystereseeffekte kommen kann, was durch den Einsatz rollwiderstandsoptimierter Gummimischungen abgemildert werden kann.

Gemäß einer weiteren bevorzugten Ausführungsform ist die Gummimischung zusätzlich in einem vierten Abschnitt elektrisch nicht leitfähig. Der vierte Abschnitt kann wenigstens teilweise radial unterhalb und/oder oberhalb des zweiten Abschnitts angeordnet sein. Der vierte Abschnitt kann so verlaufen, dass in Axialrichtung und/oder in Umfangsrichtung neben dem radial unterhalb und/oder oberhalb des zweiten Abschnitts angeordneten Teil des vierten Abschnitts Lücken verbleiben. Insbesondere kann der vierte Abschnitt so verlaufen, dass zwischen dem vierten Abschnitt und dem ersten Abschnitt und/oder zwischen dem vierten Abschnitt und dem dritten Abschnitt und/oder innerhalb des vierten Abschnitts in Axialrichtung und/oder in Umfangsrichtung Lücken verbleiben. Die Lücken können von dem zweiten Abschnitt ausgefüllt sein. In diesem Falle füllt der zweite Abschnitt die Lücken in dem Sinne aus, dass der zweite Abschnitt von radial oberhalb und/oder von radial unterhalb durch die Lücken hindurch mechanisch kontaktiert werden kann, also nicht durch den vierten Abschnitt verdeckt ist.

Der vierte Abschnitt kann einer globale axiale Breite zwischen 1% und 60% einer axialen Breite des Fahrzeugreifens und vorzugsweise zwischen 1% und 30% der axialen Breite des Fahrzeugreifens aufweisen. Die globale axiale Breite des vierten Abschnitts kann zwischen axialen Extrempositionen, also zwischen zwei axial weitestmöglich voneinander beabstandeten Positionen des vierten Abschnitts gemessen werden, wobei die Extrempositionen an verschiedenen Umfangspositionen gelegenen sein können. Die globale axiale Breite des vierten Abschnitts kann mit einer globalen axialen Breite des zweiten Abschnitts übereinstimmen.

Der vierte Abschnitt kann eine lokale axiale Breite zwischen 1 mm und 60 mm aufweisen. Die lokale axiale Breite des vierten Abschnitts kann in Umfangsrichtung lokal vermessen werden, ist der vierte Abschnitt in Abhängigkeit von der Umfangsposition beispielsweise in variierenden axialen Bereichen angeordnet, so wird die axiale Breite mit anderen Worten nicht zwischen an verschiedenen Umfangspositionen gelegenen axialen Extrempositionen gemessen, sondern je Umfangsposition.

Der vierte Abschnitt kann den ersten und den dritten Abschnitt verbinden. Gemäß einer besonders bevorzugten Variante der hier beschriebenen Ausführungsform sind der erste Abschnitt, der vierte Abschnitt und der dritte Abschnitt aus einer zusammenhängenden aufzuspulenden Länge aufgespult, wobei der vierte Abschnitt aus einem solchen Teil der aufzuspulenden Länge aufgespult ist, welcher zwischen jenen Teilen der aufzuspulenden Länge angeordnet ist, aus denen der erste bzw. der dritte Abschnitt aufgespult sind. Vorzugsweise ist der vierte Abschnitt einlagig und spiralförmig aufgespult, wobei die Steigung der Spiralform größer ist als die Breite der aufzuspulenden Länge, sodass Lücken neben bzw. in dem vierten Abschnitt verbleiben. In diesem Fall kann die lokale axiale Breite des vierten Abschnitts im Wesentlichen der Breite der aufzuspulenden Länge entsprechen, insbesondere der Breite der aufzuspulenden Länge geteilt durch den Cosinus des Steigungswinkels der Spiralform in dem vierten Abschnitt. Der zweite Abschnitt kann radial über und/oder unter dem vierten Abschnitt aufgespult sein und durch die Lücken neben bzw. in dem vierten Abschnitt hindurch zu einem elektrisch leitenden Pfad durch den Fahrzeugreifen beitragen.

Der Fahrzeugreifen kann einen elektrisch nichtleitenden Laufstreifen umfassen, wobei sich ein elektrisch leitender Kanal radial durch den Lauftreifen erstreckt. Ein elektrisch nichtleitender Laufstreifen kann wenigstens entweder eine Cap oder eine Base umfassen, die jeweils für sich genommen auf einer elektrisch nicht leitfähigen Gummimischung basieren. Vorzugsweise sind sowohl die Cap als auch die Base des Laufstreifens auf einen niedrigen Rollwiderstand optimiert und basieren im Gegenzug beide auf elektrisch nicht leitfähigen Gummimischungen. Der elektrisch leitende Kanal kann sich von einer Lauffläche an einer radialen Oberseite der Cap durch die Cap und die Base bis zu einer radialen Unterseite der Base erstrecken und kann sich über den gesamten Umfang des Fahrzeugreifens erstrecken. Insbesondere kann der elektrisch leitende Kanal als an sich bekannter Carbon Center Beam ausgeführt sein.

Der elektrisch leitende Kanal kann den zweiten Abschnitt der Spulbandage elektrisch leitend kontaktieren und insbesondere in direktem mechanischem Kontakt elektrisch leitend kontaktieren. Übliche Carbon Center Beams werden vorzugsweise in der axialen Umgebung des Reifenäquators angeordnet, sodass sich ein synergetischer Vorteil ergibt, wenn der zweite Abschnitt der Spulbandage in der Reifenäquatorgegend des Fahrzeugreifens angeordnet ist und wenn insbesondere die Reifenäquatorebene den zweiten Abschnitt schneidet. Der elektrisch leitende Kanal kann über den gesamten Umfang des Fahrzeugreifens in mechanischem Kontakt mit dem zweiten Abschnitt stehen. Alternativ kann der mechanische Kontakt stellenweise unterbrochen sein, beispielsweise durch den vierten Abschnitt der Spulbandage, wobei insbesondere eine oder mehrere Wicklungen des vierten Abschnitts den Überschneidungsbereich zwischen dem elektrisch leitenden Kanal und dem zweiten Abschnitt kreuzen können.

Der zweite Abschnitt kann eine axiale Breite zwischen 1% und 60% einer axialen Breite des Fahrzeugreifens und vorzugsweise zwischen 1% und 30% der axialen Breite des Fahrzeugreifens aufweisen. Hierdurch kann ein guter Kompromiss zwischen einem ausreichenden Leitwert und einem geringen Rollwiderstand in dem Fahrzeugreifen gefunden werden.

Für die Spulbandage können als aufzuspulende Längen Materialstreifen verwendet werden, die vorzugsweise zwischen 5 mm und 50 mm breit sein können. Alternativ oder zusätzlich kann die Spulbandage teilweise oder ganz aus gummierten Einzelkorden aufgespult sein.

Die Spulbandage kann in dem ersten und in dem zweiten Abschnitt jeweils im Wesentlichen einlagig und spiralförmig aufgespult sein. Eine im Wesentlichen einlagige Spulbandage kann am Anfang und/oder am Ende eines Abschnitts auch stellenweise zweilagig ausfallen, beispielsweise im Rahmen eines sogenannten Runstops. Der zweite Abschnitt kann mit zwischen 0,5 und 20 und vorzugsweise mit zwischen 1 und 10 Umdrehungen aufgespult sein. Grundsätzlich können bei der Verwendung von breiteren aufzuspulenden Längen geringere Umdrehungszahlen notwendig und sinnvoll sein als bei schmaleren aufzuspulenden Längen, wenn beispielsweise ein zweiter Abschnitt mit einer bestimmten Breite gewünscht ist. Unabhängig hiervon kann in Hinblick auf die Stabilität des Spulbilds und/oder die praktischen Erfordernisse eines Herstellungsverfahrens eine bestimmte Umdrehungszahl gewählt werden.

Alternativ kann die Spulbandage zwei- oder mehrlagig aufgespult sein. In diesem Fall sollte sich der zweite Abschnitt zusammenhängend über die gesamte radiale Tiefe der Spulbandage erstrecken. Hierdurch kann eine die Spulbandage radial vollständig durchdringende elektrische Brücke sichergestellt werden. Das Zusammenhängen eines zwei- oder mehrlagigen zweiten Abschnitts kann erreicht werden, indem die entsprechenden Wicklungen in radialer Richtung in direktem Kontakt zueinander übereinander gespult werden, sodass ein elektrisch leitender Pfad senkrecht zu einer Längserstreckung der aufgespulten Länge und zwischen radial übereinanderliegenden Wicklungen verläuft. Es kann ausreichen, wenn sich der zweite Abschnitt nur in Teilbereichen seiner Umfangs- und/oder Axialerstreckung zusammenhängend über die gesamte radiale Tiefe der Spulbandage erstreckt. Der zweite Abschnitt kann abseits der genannten Teilbereiche radial unten, oben und/oder mittig von Abschnitten mit nicht leitfähigen Gummimischungen begrenzt bzw. unterbrochen werden, ein solcher begrenzender bzw. unterbrechender Abschnitt kann insbesondere der vierte Abschnitt der Spulbandage sein. Alternativ können auch lückenhafte Spulbilder für den zweiten Abschnitt gewählt werden, beispielsweise spiralförmig mit einer die Breite der aufzuspulenden Länge übertreffenden Steigung, in welchem Falle der elektrisch leitende Pfad hauptsächlich entlang der Längserstreckung der aufgespulten Länge verliefe.

Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge.

Der Fahrzeugreifen kann eine Seitenwand umfassen, wobei die Seitenwand auf einer elektrisch nicht leitfähigen Gummimischung basieren kann. Der Fahrzeugreifen umfasst vorzugsweise einen Gürtelverband, über dem die Spulbandage aufgespult ist. Der Gürtelverband kann gemäß einer Ausführungsform auf einer elektrisch leitfähigen Gummimischung basieren. Es kann ein elektrischer Kontakt zwischen der radialen Unterseite des zweiten Abschnitts der Spulbandage und der radialen Oberseite des Gürtelverbandes bestehen. Dieser elektrische Kontakt kann von mechanischem Kontakt begleitet sein und kann über die gesamte Erstreckung des zweiten Abschnitts der Spulbandage in Axialrichtung und/oder in Umfangsrichtung bestehen. Alternativ können der elektrische und/oder mechanische Kontakt zwischen dem Gürtelverband und der Spulbandage stellenweise unterbrochen sein, beispielsweise durch den vierten Abschnitt der Spulbandage, insbesondere durch eine den zweiten Abschnitt radial unterhalb kreuzende Wicklung des vierten Abschnitts. Der Fahrzeugreifen kann eine Karkasse umfassen, wobei die Karkasse auf einer elektrisch leitfähigen Gummimischung basieren kann. Insgesamt kann ein zusammenhängender elektrisch leitender Pfad durch den Laufstreifen, die Gürtelbandage, den Gürtelverband und die Karkasse verlaufen. Auf die beschriebene Weise kann elektrische Ladung zwischen einer Felge, die mit der Karkasse leitend verbunden sein kann, und einem Fahrbahnuntergrund, der mit dem elektrisch leitenden Kanal durch den Laufstreifen in Kontakt stehen kann, verschoben und abgeleitet werden. Die elektrisch leitenden Teilpfade zwischen dem zweiten Abschnitt der Spulbandage und dem Fahrbahnuntergrund auf der einen Seite sowie zwischen dem zweiten Abschnitt der Spulbandage und der Felge auf der anderen Seite können auch unter Einsatz alternativer Strukturen umgesetzt werden. Beispielsweise können der Gürtelverband und/oder die Karkasse auf elektrisch nicht leitfähigen Gummimischungen basieren, wobei elektrisch leitende Pfade beispielsweise unter Zuhilfenahme elektrisch leitender Garne hergestellt werden können.

Insgesamt sollten die spezifischen Widerstände und Dimensionen der den elektrisch leitenden Pfad zwischen Fahrbahn und Felge definierenden Baugruppen so bemessen sein, dass der elektrisch leitende Pfad einen Widerstand von weniger als 1×10¹⁰ Ω, vorzugsweise von weniger als 1×10⁸ Ω, weiter vorzugsweise von weniger als 1×10⁶ Ω hat.

Die Erfindung betrifft außerdem ein Verfahren zur Herstellung einer Gürtelbandage in einem Fahrzeugreifen, wobei ein Gürtelverband für einen Fahrzeugreifen und eine erste und zweite zu einer Spulbandage aufzuspulende Länge bereitgestellt werden, wobei die aufzuspulenden Längen in Gummimischungen eingebettete Festigkeitsträger umfassen. Ein erster Abschnitt der Spulbandage wird aus der ersten aufzuspulenden Länge auf den Gürtelverband gespult, wobei die Gummimischung der ersten aufzuspulenden Länge elektrisch nicht leitfähig ist. Ein zweiter Abschnitt der Spulbandage wird aus der zweiten aufzuspulenden Länge auf den Gürtelverband gespult, wobei die Gummimischung der zweiten aufzuspulenden Länge elektrisch leitfähig ist.

Durch den Einsatz zweier aufzuspulender Längen, beide umfassend Festigkeitsträger aber mit unterschiedlichen Gummimischungen, wird ein überraschend einfaches Verfahren zur Herstellung einer durchgehend festen Gürtelbandage mit individuell dimensionierbaren Abschnitten zur Optimierung des Rollwiderstands bzw. des elektrischen Leitwerts geschaffen.

Vorzugsweise wird die erste aufzuspulende Länge von einem ersten Spulkopf und die zweite aufzuspulende Länge von einem zweiten Spulkopf aufgespult. Auf diese Weise lassen sich die Bereitstellung und das Aufspulen der Längen besonders einfach handhaben.

Gemäß einer Ausführungsform kann aus der ersten aufzuspulenden Länge zusätzlich ein dritter Abschnitt der Spulbandage aufgespult werden. Auf diese Weise lässt sich eine besonders effiziente Nutzung der zur Herstellung der Gürtelbandage erforderlichen Werkzeugen und Materialien erreichen. Alternativ oder zusätzlich kann aus der ersten aufzuspulenden Länge zusätzlich ein vierter Abschnitt der Spulbandage aufgespult werden. Hierbei kann der vierte Abschnitt insbesondere aus einem den ersten und dritten Abschnitt verbindenden Teil der ersten aufzuspulenden Länge aufgespult werden.

Gemäß einer Ausführungsform ist das Verfahren in die folgenden Schritte untergliedert:
i) der erste Abschnitt der Spulbandage wird aufgespult;
ii) die erste aufzuspulende Länge wird durchtrennt;
iii) der erste Spulkopf wird axial auf eine Lückenbreite Abstand zu einem axialen Rand des ersten Abschnitts gebracht;
iv) beginnend aus der in Schritt iii) eingestellten Position wird der dritte Abschnitt der Spulbandage aufgespult;
v) der zweite Abschnitt der Spulbandage wird zwischen dem ersten und dritten Abschnitt über die Lückenbreite hinweg aufgespult.

Gemäß einer besonders einfachen Unterform der oben beschriebenen Ausführungsform kann in Schritt i) der erste Abschnitt der Spulbandage von einer ersten Reifenschulter aus spiralförmig in Richtung des Reifenäquators aufgespult werden, wobei in Schritt iv) der dritte Abschnitt der Spulbandage beginnend aus der in Schritt iii) eingestellten Position spiralförmig bis zu einer zweiten Reifenschulter aufgespult wird, wobei in Schritt v) der zweite Abschnitt der Spulbandage spiralförmig aufgespult wird. Die beschriebene Unterform ist zur Herstellung einer im Wesentlichen einlagig und spiralförmig aufgespulten Gürtelbandage geeignet. Im Rahmen der beschriebenen Ausführungsform lassen sich auch alternative Spulbilder realisieren. Beispielsweise können die erste und/oder die zweite aufzuspulende Länge mit einem jeweils auf sich selbst bezogenen Überlapp aufgespult werden; alternativ oder zusätzlich kann die zweite aufzuspulende Länge mit einem Überlapp zu dem ersten und/oder dem dritten Abschnitt aufgespult werden. Die Ausführungsform kann darüber hinaus dahingehend modifiziert werden, dass zusätzlich zu den beschriebenen Schritten i) bis v) ein oder mehrere weitere Schritte in das Verfahren integriert werden und/oder aus den beschriebenen Schritten i) bis v) einer oder mehrere Schritte weggelassen werden. Das erfindungsgemäße Verfahren kann auch außerhalb der beschriebenen Ausführungsform, mit gänzlich anderen Schritten erfolgreich implementiert werden.

Gemäß einer alternativen Ausführungsform ist das Verfahren in die folgenden Schritte untergliedert:
a) der erste Abschnitt wird aus einer ersten aufzuspulenden Länge von einer ersten Reifenschulter bis zu einer ersten axialen Position aufgespult;
b) der vierte Abschnitt wird aus der ersten aufzuspulenden Länge zwischen der ersten axialen Position und einer zweiten axialen Position so aufgespult, dass in einer von der Axial- und Umfangsrichtung zwischen der ersten und zweiten axialen Position aufgespannten Fläche von dem vierten Abschnitt nicht abgedeckte Lücken verbleiben;
c) der dritte Abschnitt wird aus der ersten aufzuspulenden Länge zwischen der zweiten axialen Position und einer zweiten Reifenschulter aufgespult.

Hierbei kann die erste axiale Position zwischen einem Reifenäquator und einer ersten Reifenschulter liegen und/oder die zweite axiale Position kann zwischen dem Reifenäquator und einer zweiten Reifenschulter liegen. Gemäß einer ersten Variante kann der zweite Abschnitt der Spulbandage vor den beschriebenen Schritten a) bis c) zwischen der ersten und der zweiten axialen Position aus einer zweiten aufzuspulenden Länge auf den Gürtelverband gespult werden. Gemäß einer zweiten Variante kann der zweite Abschnitt nach den beschriebenen Schritten a) bis c) zwischen der ersten und der zweiten axialen Position aus der zweiten aufzuspulenden Länge über den Gürtelverband und den vierten Abschnitt der Spulbandage gespult werden.

Auf die beschriebene Weise kann die erste aufzuspulende Länge vorteilhaft in einem durchgehenden Spulvorgang und ohne Durchtrennen der ersten aufzuspulenden Länge von der ersten Reifenschulter bis zu der zweiten Reifenschulter aufgespult werden. Gemäß der ersten beschriebenen Variante zum Aufspulen des zweiten Abschnitts kann durch die neben und/oder in dem vierten Abschnitt verbleibenden Lücken hindurch ein Kontakt zwischen einem radial oberhalb der Spulbandage angeordneten Leitfähigkeitskanal, insbesondere einem Carbon Center Beam, und dem zweiten Abschnitt hergestellt werden. Gemäß der zweiten beschriebenen Variante kann durch die Lücken in dem vierten Abschnitt hindurch ein Kontakt zwischen dem radial unterhalb der Spulbandage angeordneten Gürtelverband und dem zweiten Abschnitt hergestellt werden. Auf diese Weise kann ein elektrisch leitender Pfad durch den Reifen sichergestellt werden. Der vierte Abschnitt kann im Rahmen des beschriebenen Schritts b) beispielsweise dadurch lückenhaft aufgespult werden, dass die Steigung einer spiralförmigen Spulbewegung größer als die Breite der ersten aufzuspulenden Länge gehalten wird, wobei die erste aufzuspulende Länge im Bereich des vierten Abschnitts den Reifenäquator kreuzen kann.

Das Verfahren kann mit weiteren Merkmalen fortgebildet werden, die im Zusammenhang mit dem erfindungsgemäßen Fahrzeugreifen beschrieben sind. Der Fahrzeugreifen kann mit weiteren Merkmalen fortgebildet werden, die im Zusammenhang mit dem erfindungsgemäßen Verfahren beschrieben sind.

Die Erfindung wird nachfolgend unter Bezugnahme auf die beigefügten Zeichnungen anhand vorteilhafter Ausführungsformen beispielhaft beschrieben. Es zeigen:
Figur 1 schematisch ein vereinfachtes Schaltbild betreffend einen elektrischen Pfad durch einen Fahrzeugreifen gemäß einer Ausführungsform der Erfindung,
Figur 2 schematisch zwei Ansichten eines Spulbilds gemäß einer Ausführungsform der Erfindung,
Figur 3 schematisch eine Ansicht eines Spulbilds gemäß einer weiteren Ausführungsform der Erfindung,
Figur 4 schematisch eine Ansicht eines Spulbilds gemäß einer alternativen Ausführungsform der Erfindung.

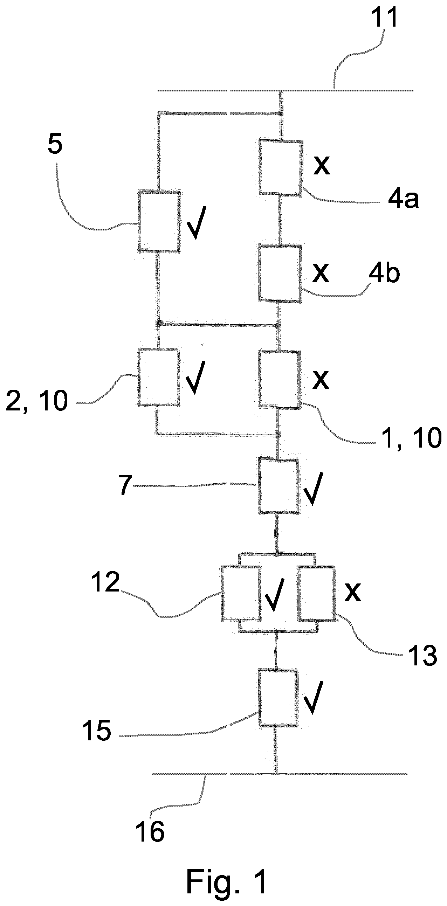

Figur 1 zeigt als schematisches Schaltbild den elektrischen Pfad durch einen Fahrzeugreifen, zwischen einer Fahrbahn 11 und einer Felge 16 des Fahrzeugreifens. Jedes der eingezeichneten Rechtecke repräsentiert einen elektrischen Widerstand einer Baugruppe in dem Fahrzeugreifen. Durch ein Kreuz neben einem Rechteck wird bezeichnet, dass diese Baugruppe auf einer elektrisch nicht leitfähigen Gummimischung basiert, sodass die Baugruppe kein maßgeblicher Teil eines elektrischen Pfads durch den Fahrzeugreifen ist. Ein Haken neben einem Rechteck indiziert, dass diese Baugruppe auf einer elektrisch leitfähigen Gummimischung basiert, sodass die Baugruppe maßgeblicher Teil eines elektrischen Pfads durch den Fahrzeugreifen ist.

Der Fahrzeugreifen umfasst einen Laufsteifen, welcher eine Cap 4a und eine Base 4b umfasst, wobei Cap 4a und Base 4b auf Rollwiderstand optimierte Gummimischungen enthalten, die elektrisch nicht leitfähig sind. Der Laufstreifen 4a, 4b wird von einem elektrisch leitenden Kanal 5 überbrückt, wobei der elektrisch leitende Kanal in der dargestellten Ausführungsform als Carbon Center Beam ausgebildet sein soll, der sowohl die Cap 4a als auch die Base 4b elektrisch überbrückt. Die Spulbandage 10 ist erfindungsgemäß in einen ersten und einen zweiten Abschnitt 1, 2 unterteilt, wobei der erste Abschnitt 1 elektrisch nichtleitend ist und eine auf Rollwiderstand optimierte Gummimischung enthält. Der zweite Abschnitt 2 enthält eine elektrisch leitende Gummimischung und stellt eine elektrische Verbindung zwischen dem Carbon Center Beam 5 und einem Gürtelverband 7 her, wobei der Gürtelverband 7 in der dargestellten Ausführungsform auf einer elektrisch leitfähigen Gummimischung basiert. Eine Seitenwand 13 basiert auf einer elektrisch nicht leitfähigen, auf Rollwiderstand optimierten Gummimischung, wobei eine Karkasse 12 auf einer elektrisch leitfähigen Gummimischung beruht und eine elektrische Brücke zwischen dem Gürtelverband 7 und einer elektrisch leitenden Felgenleiste 15 schafft, die wiederum elektrisch leitend mit einer Felge 16 verbunden ist. Durch die erfindungsgemäße Ausführung mit zwei Abschnitten 1, 2, kann die Spulbandage 10 einerseits zu einem niedrigen Rollwiderstand des Fahrzeugreifens beitragen; andererseits kann beispielsweise gemäß dem in Figur 1 dargestellten elektrischen Pfad gezielt eine elektrische Brücke in der Spulbandage 10 implementiert werden.

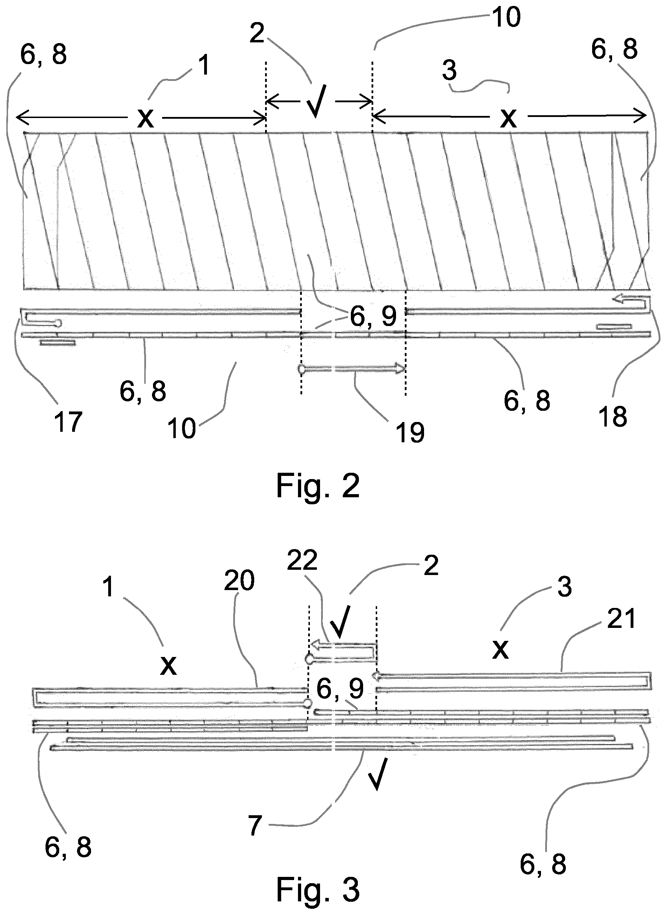

Figur 2 zeigt im oberen Bildbereich eine Spulbandage 10, wobei in der Bildebene senkrecht der über 360° abgerollte Umfang und horizontal die Quererstreckung der Spulbandage 10 aufgetragen sind. Die Spulbandage 10 ist in drei Abschnitte 1, 2, 3 unterteilt, deren jeweilige axiale Erstreckung in der Figur durch Pfeile gekennzeichnet und durch gestrichelte Linien abgegrenzt ist, wobei der erste und der dritte Abschnitt 1, 3 den zweiten Abschnitt 2 axial von zwei Seiten her begrenzen. Der zweite Abschnitt 2 ist in der axialen Mitte, im Bereich eines Reifenäquators angeordnet und kann radial oben mit einem Carbon Center Beam 5 in Kontakt stehen (vgl. Figur 1).

Die Spulbandage 10 ist aus Materialstreifen 6 aufgespult, wobei der Materialstreifen 6 in dem ersten Abschnitt 1 der Spulbandage 10 aus einer ersten aufzuspulenden Länge 8 stammt. Die erste aufzuspulende Länge 8, und damit auch die Spulbandage 10 in dem ersten Abschnitt 1, umfasst als Korde entlang der aufzuspulenden Länge 8 verlaufende Festigkeitsträger (nicht gezeigt), die in eine elektrisch nicht leitfähige, auf Rollwiderstand optimierte Gummimischung eingebettet sind. Der Materialstreifen 6 in dem dritten Abschnitt stammt ebenfalls aus der ersten aufzuspulenden Länge 8. Dementsprechend sind der erste und der dritte Abschnitt 1, 3 elektrisch nichtleitend und tragen zu einem elektrischen Pfad durch den Fahrzeugreifen nicht maßgeblich bei (vgl. die entsprechende Kennzeichnung durch Kreuze).

Der Materialstreifen 6 in dem zweiten Abschnitt 2 der Spulbandage 10 stammt aus einer zweiten aufzuspulenden Länge 9. Die zweite aufzuspulende Länge 9, und damit auch die Spulbandage 10 in dem zweiten Abschnitt 2, umfasst wie die erste aufzuspulende Länge 9 als Korde ausgebildete Festigkeitsträger, die im Unterschied zu der ersten aufzuspulenden Länge 8 in eine elektrisch leitfähige Gummimischung eingebettet sind. Dementsprechend ist der zweite Abschnitt 2 elektrisch leitend und trägt zu dem elektrischen Pfad durch den Fahrzeugreifen maßgeblich bei (vgl. die Kennzeichnung durch den Haken).

Dadurch, dass beide aufzuspulenden Längen 8, 9 Festigkeitsträger umfassen, ist die gesamten Spulbandage 10 entsprechend stabil. Durch die unterschiedlichen Gummimischungen können Beiträge sowohl zu einem niedrigen Rollwiderstand als auch zu einem elektrischen Pfad in einem Fahrzeugreifen geleistet werden.

Im unteren Bildbereich der Figur 2 ist eine Schnittansicht der Spulbandage 10 in einer von der Axialrichtung und Radialrichtung aufgespannten Ebene zu sehen. Demgemäß ist die Spulbandage im Wesentlichen einlagig aufgespult; lediglich an den axialen Rändern sind die Materialstreifen 6 der ersten aufzuspulenden Länge 8 in sogenannten Runstops stellenweise doppellagig übereinander gespult. Durch mit Referenzzeichen 17, 18, 19 bezeichnete Pfade sind die bei der Herstellung der dargestellten Spulbandage 10 durchzuführenden Bewegungen eines ersten und zweiten Spulkopfes schematisch veranschaulicht. Demgemäß wird damit begonnen, die erste aufzuspulende Länge 8 aus dem ersten Spulkopf von der in Figur 1 links dargestellten axialen Seite kommend entlang des Pfads 17 in Richtung des Reifenäquators aufzuspulen. An der Grenze zwischen dem ersten Abschnitt 1 und dem zweiten Abschnitt 2 wird die erste aufzuspulende Länge 8 durchtrennt und der erste Spulkopf wird, ohne abzuspulen, über den Reifenäquator hinweg zu der Grenze zwischen dem zweiten Abschnitt 2 und dem dritten Abschnitt 3 gefahren. Von hier aus wird die erste aufzuspulende Länge 8 aus dem ersten Spulkopf entlang des Pfads 18 in Richtung der in der Figur rechts dargestellten axialen Seite gespult. Anschließend wird die zweite aufzuspulende Länge 9 aus dem zweiten Spulkopf entlang des Pfads 19 aufgespult, um die Spulbandage 10 mit dem zweiten Abschnitt 2 zu vervollständigen.

Figur 3 zeigt eine alternative Ausführungsform einer erfindungsgemäßen Spulbandage 10 in einer ähnlichen Ansicht wie gemäß dem unteren Bildbereich der Figur 2. Zuunterst ist zusätzlich ein Gürtelverband 7 dargestellt, über dem die Spulbandage 10 aus Materialstreifen 6 zweilagig aufgespult ist. Beginnend an der Grenze zwischen einem ersten Abschnitt 1 und einem zweiten Abschnitt 2 wird entlang eines Pfads 20 eine erste aufzuspulende Länge 8 aus einem ersten Spulkopf abgespult. Hierbei wird in Richtung einer in der Figur 2 links dargestellten axialen Seite zunächst eine erste Lage des ersten Abschnitts 1 aufgespult; daraufhin wird die Orientierung gewechselt und eine zweite Lage in Richtung des Ausgangspunkts aufgespult. Zurück an der Grenze zwischen dem ersten Abschnitt 1 und dem zweiten Abschnitt 2 wird die erste aufzuspulende Länge 8 durchtrennt und der erste Spulkopf wird, ohne abzuspulen, über den Reifenäquator hinweg zu der Grenze zwischen dem zweiten Abschnitt 2 und dem dritten Abschnitt 3 gefahren. Der dritte Abschnitt 3 wird entlang des Pfads 21 analog zu dem ersten Abschnitt 1 und ebenfalls aus der ersten aufzuspulenden Länge 8 sowie mit dem ersten Spulkopf aufgespult. Der zweite Abschnitt 2 wird aus einer zweiten aufzuspulenden Länge 9 mit einem zweiten Spulkopf entlang des Pfads 22 doppellagig aufgespult. Der Materialstreifen 6 der zweiten aufzuspulenden Länge 9 basiert auf einer elektrisch leitfähigen Gummimischung und ist in dem zweiten Abschnitt 2 radial durchgängig aufgespult, sodass eine elektrische Brücke zwischen dem auf einer elektrisch leitfähigen Gummimischung basierenden Gürtelverband 7 und einem in Figur 2 nicht gezeigten, radial oberhalb des zweiten Abschnitts 2 anzuordnenden Carbon Center Beam 5 realisiert werden kann.

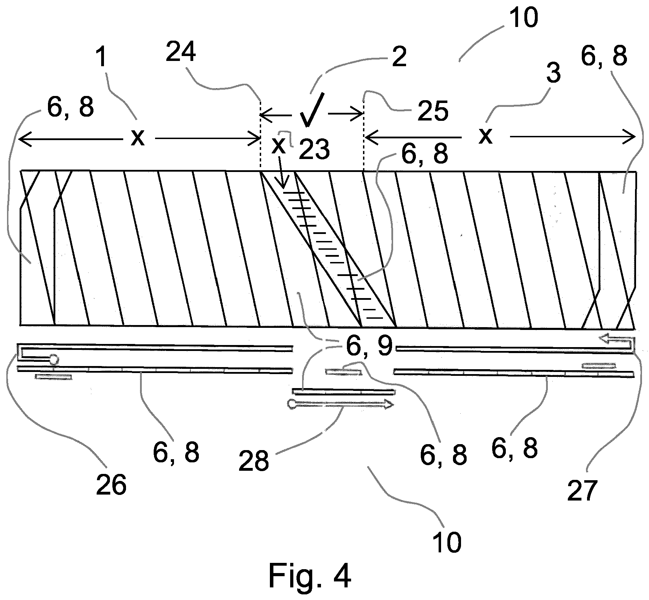

Figur 4 zeigt eine alternative Ausführungsform einer erfindungsgemäßen Spulbandage 10 in einer ähnlichen Ansicht wie gemäß Figur 2. Die Spulbandage 10 ist in vier Abschnitte 1, 2, 3, 23 unterteilt, deren Anordnung in der Figur durch Pfeile gekennzeichnet bzw. durch gestrichelte Linien abgegrenzt ist, wobei der erste und der dritte Abschnitt 1, 3 den zweiten Abschnitt 2 axial von zwei Seiten her begrenzen und wobei der vierte Abschnitt 23 zwischen dem ersten und dem dritten Abschnitt 1, 3 quer über den zweiten Abschnitt 2 verläuft. Der erste Abschnitt 1 erstreckt sich zwischen einer ersten Reifenschulter und einer ersten axialen Position 24, wobei die erste Reifenschulter und die erste axiale Position 24 zu einer ersten Seite eines Reifenäquators angeordnet sind. Der zweite Abschnitt 2 und der vierte Abschnitt 23 erstrecken sich zwischen der ersten axialen Position 24 und einer zweiten axialen Position 25. Der dritte Abschnitt 3 erstreckt sich zwischen der zweiten axialen Position 25 und einer zweiten Reifenschulter, wobei die zweite Reifenschulter und die zweite axiale Position 25 zu einer zweiten Seite des Reifenäquators angeordnet sind.

Die Spulbandage 10 ist aus Materialstreifen 6 aufgespult; der Materialstreifen 6 in dem zweiten Abschnitt 2 der Spulbandage 10 stammt aus einer zweiten aufzuspulenden Länge 9. Die zweite aufzuspulende Länge 9, und damit auch die Spulbandage 10 in dem zweiten Abschnitt 2, umfasst als Korde ausgebildete Festigkeitsträger, die in eine elektrisch leitfähige Gummimischung eingebettet sind. Dementsprechend ist der zweite Abschnitt 2 elektrisch leitend und trägt zu dem elektrisch leitenden Pfad durch den Fahrzeugreifen maßgeblich bei (vgl. die Kennzeichnung durch den Haken). In dem gezeigten Ausführungsbeispiel ist der zweite Abschnitt 2 direkt radial oberhalb eines in Figur 4 nicht gezeigten elektrisch leitenden Gürtelverbandes aufgespult.

Der Materialstreifen 6 in dem ersten Abschnitt 1 der Spulbandage 10 stammt aus einer ersten aufzuspulenden Länge 8. Die erste aufzuspulende Länge 8, und damit auch die Spulbandage 10 in dem ersten Abschnitt 1, umfasst als Korde entlang der aufzuspulenden Länge 8 verlaufende Festigkeitsträger (nicht gezeigt), die in eine elektrisch nicht leitfähige, auf Rollwiderstand optimierte Gummimischung eingebettet sind. Der Materialstreifen 6 in dem dritten Abschnitt stammt ebenfalls aus der ersten aufzuspulenden Länge 8. Dementsprechend sind der erste und der dritte Abschnitt 1, 3 elektrisch nichtleitend und tragen zu einem elektrischen Pfad durch den Fahrzeugreifen nicht maßgeblich bei (vgl. die entsprechende Kennzeichnung durch Kreuze). Der Materialstreifen 6 in dem vierten Abschnitt 23 stammt ebenfalls aus der ersten aufzuspulenden Länge 8, wobei der Materialstreifen 6 aus der ersten aufzuspulenden Länge 8 von dem ersten Abschnitt 1 über den vierten Abschnitt 23 bis zu dem dritten Abschnitt ohne Unterbrechung aufgespult wurde. Zur besseren Unterscheidbarkeit von dem zweiten Abschnitt 2 ist der vierte Abschnitt 23 schraffiert dargestellt. Der vierte Abschnitt 23 liegt radial oberhalb des zweiten Abschnitts 2, verläuft in Axial- und Umfangsrichtung schräg über den zweiten Abschnitt 2 und kreuzt dabei den Reifenäquator. Wenn im Bereich des Reifenäquators radial oberhalb der Spulbandage 10 ein in Figur 4 nicht dargestellter Carbon Center Beam 5 angeordnet wird, kann dieser den zweiten Abschnitt 2 im Bereich der neben dem vierten Abschnitt 23 verbleibenden Lücken kontaktieren. Dadurch, dass der vierte Abschnitt 23 zusammenhängend mit dem ersten und dritten Abschnitt 1, 3 aufgespult wird, kann die Ausführungsform gemäß Figur 4 besonders effizient hergestellt werden. Dadurch, dass der vierte Abschnitt 23 im Bereich des zweiten Abschnitts lückenhaft aufgespult wird, bleiben die Vorteile der Ausführungsformen gemäß Figuren 2 und 3 insofern erhalten, als der zweite Abschnitt 2 von radial unten und oben in elektrischen Kontakt mit weiteren elektrisch leitenden Komponenten des Fahrzeugreifens treten kann.

Im unteren Bildbereich der Figur 4 ist eine Schnittansicht der Spulbandage 10 in einer von der Axialrichtung und Radialrichtung aufgespannten Ebene zu sehen. Demgemäß ist die Spulbandage im Bereich des ersten und zweiten Abschnitts 1, 3 im Wesentlichen einlagig aufgespult; lediglich an den axialen Rändern, im Bereich der Reifenschultern, sind die Materialstreifen 6 der ersten aufzuspulenden Länge 8 in sogenannten Runstops stellenweise doppellagig übereinander gespult. Durch mit Referenzzeichen 26, 27, 28 bezeichnete Pfade sind die bei der Herstellung der dargestellten Spulbandage 10 durchzuführenden Bewegungen eines ersten und zweiten Spulkopfes schematisch veranschaulicht. Demgemäß wird damit begonnen, die zweite aufzuspulende Länge 9 aus dem zweiten Spulkopf zwischen der ersten und zweiten axialen Position 24, 25 spiralförmig und lückenlos aufzuspulen. Nachfolgend wird die erste aufzuspulende Länge 8 aus dem ersten Spulkopf von der in Figur 4 links dargestellten ersten Reifenschulter kommend entlang des Pfads 26 in Richtung des Reifenäquators spiralförmig und lückenlos aufgespult. An der ersten axialen Position 24 wird die Steigung der spiralförmigen Spulbewegung vergrößert, um den vierten Abschnitt 23, weiterhin aus der ersten aufzuspulenden Länge 8 und von dem ersten Spulkopf gespeist, lückenhaft über dem zweiten Abschnitt 2 aufzuspulen. An der zweiten axialen Position 25 wird die Steigung der Spulbewegung wieder verkleinert, um den dritten Abschnitt 3 entlang des Pfads 27 in Richtung der in der Figur 4 rechts dargestellten zweiten Reifenschulter spiralförmig und lückenlos aufzuspulen. Auf diese Weise können der erste, der vierte und der dritte Abschnitt 1, 3, 23 zusammenhängend aus einer ersten aufzuspulenden Länge 8, in einer kontinuierlichen Spulbewegung eines einzelnen Spulkopfes aufgespult werden, ohne die Funktion des zweiten Abschnitts 2 als elektrische Brücke durch die Spulbandage 10 maßgeblich einzuschränken.

### Bezugszeichenliste

- 1: erster Abschnitt
- 2: zweiter Abschnitt
- 3: dritter Abschnitt
- 4a: Cap des Laufstreifens
- 4b: Base des Laufstreifens
- 5: elektrisch leitender Kanal / Carbon Center Beam
- 6: Materialstreifen
- 7: Gürtelverband
- 8: erste aufzuspulende Länge
- 9: zweite aufzuspulende Länge
- 10: Spulbandage
- 11: Fahrbahn
- 12: Karkasse
- 13: Seitenwand
- 15: Felgenleiste
- 16: Felge
- 17: Pfad des ersten Spulkopfes zum Aufspulen des ersten Abschnitts
- 18: Pfad des ersten Spulkopfes zum Aufspulen des dritten Abschnitts
- 19: Pfad des zweiten Spulkopfes zum Aufspulen des zweiten Abschnitts
- 20: Pfad des ersten Spulkopfes zum Aufspulen des ersten Abschnitts
- 21: Pfad des ersten Spulkopfes zum Aufspulen des dritten Abschnitts
- 22: Pfad des zweiten Spulkopfes zum Aufspulen des zweiten Abschnitts
- 23: vierter Abschnitt
- 24: erste axiale Position
- 25: zweite axiale Position
- 26: Pfad des ersten Spulkopfes zum Aufspulen des ersten Abschnitts
- 27: Pfad des ersten Spulkopfes zum Aufspulen des dritten Abschnitts
- 28: Pfad des zweiten Spulkopfes zum Aufspulen des zweiten Abschnitts

## Patentansprüche

1. Fahrzeugreifen mit einer als Spulbandage (10) gestalteten Gürtelbandage, wobei die Spulbandage (10) in eine Gummimischung eingebettete Festigkeitsträger umfasst, wobei die Gummimischung in einem ersten Abschnitt (1) der Spulbandage (10) elektrisch nicht leitfähig ist,
**dadurch gekennzeichnet,**
**dass** die Gummimischung in einem zweiten Abschnitt (2) der Spulbandage (10) elektrisch leitfähig ist.

2. Fahrzeugreifen nach Anspruch 1, **dadurch gekennzeichnet, dass** die Gummimischung in dem ersten Abschnitt (1) eine bessere Eignung zur Minimierung eines Rollwiderstands des Fahrzeugreifens aufweist als die Gummimischung in dem zweiten Abschnitt (2).

3. Fahrzeugreifen nach einem der Ansprüche 1 oder 2, **dadurch gekennzeichnet, dass** die Gummimischung in einem dritten Abschnitt (3) elektrisch nicht leitfähig ist, wobei der zweite Abschnitt (2) zu je einer axialen Seite von dem ersten bzw. dem dritten Abschnitt (1, 3) begrenzt wird.

4. Fahrzeugreifen nach einem der Ansprüche 1 bis 3, **dadurch gekennzeichnet, dass** die Gummimischung in einem vierten Abschnitt (23) elektrisch nicht leitfähig ist, wobei der vierte Abschnitt (23) wenigstens zu einem Teil radial unterhalb und/oder oberhalb des zweiten Abschnitts (2) angeordnet ist, wobei der vierte Abschnitt (23) so verläuft, dass in Axialrichtung und/oder in Umfangsrichtung neben dem radial unterhalb und/oder oberhalb des zweiten Abschnitts (2) angeordneten Teil des vierten Abschnitts (23) Lücken verbleiben, wobei die Lücken von dem zweiten Abschnitt (2) ausgefüllt werden.

5. Fahrzeugreifen nach einem der Ansprüche 1 bis 4, **dadurch gekennzeichnet, dass** eine Reifenäquatorebene den zweiten Abschnitt (2) schneidet.

6. Fahrzeugreifen nach einem der Ansprüche 1 bis 5, **dadurch gekennzeichnet, dass** der Fahrzeugreifen einen auf einer elektrisch nicht leitfähigen Gummimischung basierenden Laufstreifen (4a, 4b) umfasst, wobei sich ein elektrisch leitender Kanal (5) radial durch den Laufstreifen (4a, 4b) erstreckt.

7. Fahrzeugreifen nach Anspruch 6, **dadurch gekennzeichnet, dass** der elektrisch leitende Kanal (5) den zweiten Abschnitt (2) der Spulbandage (10) elektrisch leitend kontaktiert.

8. Fahrzeugreifen nach einem der Ansprüche 1 bis 7, **dadurch gekennzeichnet, dass** der zweite Abschnitt (2) eine axiale Breite zwischen 1% und 60% einer axialen Breite des Fahrzeugreifens und vorzugsweise zwischen 1% und 30% der axialen Breite des Fahrzeugreifens aufweist.

9. Fahrzeugreifen nach einem der Ansprüche 1 bis 8, **dadurch gekennzeichnet, dass** für die Spulbandage (10) verwendete Materialstreifen (6) zwischen 5 mm und 50 mm breit sind und/oder dass die Spulbandage (10) aufgespulte gummierte Einzelkorde umfasst.

10. Fahrzeugreifen nach einem der Ansprüche 1 bis 9, **dadurch gekennzeichnet, dass** die Spulbandage (10) in dem ersten und in dem zweiten Abschnitt (1, 2) jeweils im Wesentlichen einlagig und spiralförmig aufgespult ist, wobei der zweite Abschnitt (2) mit 0,5 bis 20 und vorzugsweise mit 1 bis 10 Umdrehungen aufgespult ist.

11. Verfahren zur Herstellung einer Gürtelbandage in einem Fahrzeugreifen, wobei ein Gürtelverband (7) sowie eine erste und zweite zu einer Spulbandage (10) aufzuspulende Länge (8, 9) bereitgestellt werden, wobei die aufzuspulenden Längen (8, 9) in Gummimischungen eingebettete Festigkeitsträger umfassen, wobei aus der ersten aufzuspulenden Länge (8) ein erster Abschnitt (1) der Spulbandage (10) auf den Gürtelverband (7) gespult wird, wobei die Gummimischung der ersten aufzuspulenden Länge (8) elektrisch nicht leitfähig ist,
**dadurch gekennzeichnet,**
**dass** aus der zweiten aufzuspulenden Länge (9) ein zweiter Abschnitt (2) der Spulbandage (10) auf den Gürtelverband (7) gespult wird, wobei die Gummimischung der zweiten aufzuspulenden Länge (9) elektrisch leitfähig ist.

12. Verfahren nach Anspruch 11, **dadurch gekennzeichnet, dass** die erste aufzuspulende Länge (8) von einem ersten Spulkopf und die zweite aufzuspulende Länge (9) von einem zweiten Spulkopf aufgespult werden.

13. Verfahren nach einem der Ansprüche 11 oder 12, wobei aus der ersten aufzuspulenden Länge (8) zusätzlich ein dritter Abschnitt (3) der Spulbandage (10) und/oder ein vierter Abschnitt (23) der Spulbandage (10) aufgespult wird.

14. Verfahren nach Ansprüchen 12 und 13, wobei das Verfahren in die folgenden Schritte untergliedert ist:
i) der erste Abschnitt (1) der Spulbandage (10) wird aufgespult;
ii) die erste aufzuspulende Länge (8) wird durchtrennt;
iii) der erste Spulkopf wird axial auf eine Lückenbreite Abstand zu einem axialen Rand des ersten Abschnitts (1) gebracht;
iv) beginnend aus der in Schritt iii) eingestellten Position wird der dritte Abschnitt (3) der Spulbandage (10) aufgespult;
v) der zweite Abschnitt (2) der Spulbandage (10) wird zwischen dem ersten und dritten Abschnitt (1, 3) über die Lückenbreite hinweg aufgespult.

15. Verfahren nach Ansprüchen 12 und 13, wobei das Verfahren in die folgenden Schritte untergliedert ist:
i) der erste Abschnitt (1) der Spulbandage (10) wird von einer ersten Reifenschulter bis zu einer ersten axialen Position (24) aufgespult;
ii) der vierte Abschnitt (23) der Spulbandage (10) wird aus der ersten aufzuspulenden Länge (8) zwischen der ersten axialen Position (24) und einer zweiten axialen Position (25) so aufgespult, dass in einer von der Axial- und Umfangsrichtung zwischen der ersten und zweiten axialen Position aufgespannten Fläche von dem vierten Abschnitt (23) nicht abgedeckte Lücken verbleiben;
iii) der dritte Abschnitt (3) wird aus der ersten aufzuspulenden Länge (8) zwischen der zweiten axialen Position (25) und einer zweiten Reifenschulter aufgespult;
gemäß einer ersten Alternative wird der zweite Abschnitt (2) vor den Schritten i) bis iii) zwischen der ersten und der zweiten axialen Position (24, 25) auf den Gürtelverband (7) gespult;
gemäß einer zweiten Alternative wird der zweite Abschnitt (2) nach den Schritten i) bis iii) zwischen der ersten und der zweiten axialen Position (24, 25) aus der zweiten aufzuspulenden Länge (9) auf den Gürtelverband (7) und den vierten Abschnitt (23) der Spulbandage (10) gespult.

## Claims

1. Vehicle tyre having a belt bandage in the form of a wound bandage (10), wherein the wound bandage (10) comprises strengthening members embedded into a rubber mixture, wherein the rubber mixture in a first portion (1) of the wound bandage (10) is electrically non-conductive,
**characterized**
**in that** the rubber mixture in a second portion (2) of the wound bandage (10) is electrically conductive.

2. Vehicle tyre according to Claim 1, **characterized in that** the rubber mixture in the first portion (1) has better suitability for minimization of a rolling resistance of the vehicle tyre than the rubber mixture in the second portion (2).

3. Vehicle tyre according to either of Claims 1 and 2, **characterized in that** the rubber mixture in a third portion (3) is electrically non-conductive, wherein the second portion (2) is delimited by the first and third portions (1, 3) on respective axial sides.

4. Vehicle tyre according to one of Claims 1 to 3, **characterized in that** the rubber mixture in a fourth portion (23) is electrically non-conductive, wherein at least a part of the fourth portion (23) is arranged radially below and/or above the second portion (2), wherein the fourth portion (23) runs in such a way that gaps remain in the axial direction and/or in the circumferential direction next to that part of the fourth portion (23) which is arranged radially below and/or above the second portion (2), wherein the gaps are filled by the second portion (2).

5. Vehicle tyre according to one of Claims 1 to 4, **characterized in that** a tyre equatorial plane intersects the second portion (2).

6. Vehicle tyre according to one of Claims 1 to 5, **characterized in that** the vehicle tyre comprises a tread (4a, 4b) based on an electrically non-conductive rubber mixture, wherein an electrically conductive channel (5) extends radially through the tread (4a, 4b).

7. Vehicle tyre according to Claim 6, **characterized in that** the electrically conductive channel (5) electrically conductively contacts the second portion (2) of the wound bandage (10).

8. Vehicle tyre according to one of Claims 1 to 7, **characterized in that** the second portion (2) has an axial width of between 1% and 60% of an axial width of the vehicle tyre, and preferably of between 1% and 30% of the axial width of the vehicle tyre.

9. Vehicle tyre according to one of Claims 1 to 8, **characterized in that** material strips (6) used for the wound bandage (10) have a width of between 5 mm and 50 mm, and/or **in that** the wound bandage (10) comprises single wound-on rubberized cords.

10. Vehicle tyre according to one of Claims 1 to 9, **characterized in that**, in the first and second portions (1, 2), the wound bandage (10) is respectively wound on substantially as a single ply and in the shape of a spiral, wherein the second portion (2) is wound on with 0.5 to 20, and preferably with 1 to 10, revolutions.

11. Method for producing a belt bandage in a vehicle tyre, wherein a belt assembly (7) and a first and a second length (8, 9) to be wound on to form a wound bandage (10) are provided, wherein the lengths (8, 9) to be wound on comprise strengthening members embedded into rubber mixtures, wherein a first portion (1) of the wound bandage (10) is wound onto the belt assembly (7) from the first length (8) to be wound on, wherein the rubber mixture of the first length (8) to be wound on is electrically non-conductive,
**characterized**
**in that** a second portion (2) of the wound bandage (10) is wound onto the belt assembly (7) from the second length (9) to be wound on, wherein the rubber mixture of the second length (9) to be wound on is electrically conductive.

12. Method according to Claim 11, **characterized in that** the first length (8) to be wound on is wound on by a first winding head and the second length (9) to be wound on is wound on by a second winding head.

13. Method according to either of Claims 11 and 12, wherein a third portion (3) of the wound bandage (10) and/or a fourth portion (23) of the wound bandage (10) are/is additionally wound on from the first length (8) to be wound on.

14. Method according to Claims 12 and 13, wherein the method is subdivided into the following steps:
i) the first portion (1) of the wound bandage (10) is wound on;
ii) the first length (8) to be wound on is severed;
iii) the first winding head is brought axially to a point at a distance of a gap width from an axial edge of the first portion (1);
iv) starting from the position set in step iii), the third portion (3) of the wound bandage (10) is wound on;
v) the second portion (2) of the wound bandage (10) is wound on between the first and third portions (1, 3) across the gap width.

15. Method according to Claims 12 and 13, wherein the method is subdivided into the following steps:
i) the first portion (1) of the wound bandage (10) is wound on from a first tyre shoulder as far as a first axial position (24);
ii) the fourth portion (23) of the wound bandage (10) is wound on from the first length (8) to be wound on between the first axial position (24) and a second axial position (25) in such a way that, in an area spanned by the axial and circumferential directions between the first and second axial positions, gaps not covered by the fourth portion (23) remain;
iii) the third portion (3) is wound on from the first length (8) to be wound on between the second axial position (25) and a second tyre shoulder;
according to a first alternative, the second portion (2) is wound onto the belt assembly (7) between the first and second axial positions (24, 25) before steps i) to iii);
according to a second alternative, the second portion (2) is wound onto the belt assembly (7) and the fourth portion (23) of the wound bandage (10) from the second length (9) to be wound on between the first and second axial positions (24, 25) after steps i) to iii).

## Revendications

1. Pneu de véhicule comprenant un bandage de ceinture conçu sous forme de bandage d'enroulement (10), le bandage d'enroulement (10) comprenant des renforts noyés dans un mélange de caoutchouc, le mélange de caoutchouc, dans une première section (1) du bandage d'enroulement (10), n'étant pas électriquement conducteur,
**caractérisé en ce que**
le mélange de caoutchouc, dans une deuxième section (2) du bandage d'enroulement (10), est électriquement conducteur.

2. Pneu de véhicule selon la revendication 1, **caractérisé en ce que** le mélange de caoutchouc, dans la première section (1), présente une meilleure aptitude à la minimisation d'une résistance au roulement du pneu de véhicule que le mélange de caoutchouc dans la deuxième section (2).

3. Pneu de véhicule selon l'une quelconque des revendications 1 ou 2, **caractérisé en ce que** le mélange de caoutchouc, dans une troisième section (3), n'est pas électriquement conducteur, la deuxième partie (2) étant délimitée, de chaque côté axial, par la première et la troisième section (1, 3).

4. Pneu de véhicule selon l'une quelconque des revendications 1 à 3, **caractérisé en ce que** le mélange de caoutchouc, dans une quatrième section (23), n'est pas électriquement conducteur, la quatrième section (23) étant agencée au moins en partie radialement en dessous et/ou au-dessus de la deuxième section (2), la quatrième section (23) s'étendant de telle manière que des espaces subsistent dans la direction axiale et/ou la direction circonférentielle à côté de la partie de la quatrième section (23) agencée radialement en dessous et/ou au-dessus de la deuxième section (2), lesdits espaces étant comblés par la deuxième section (2).

5. Pneu de véhicule selon l'une quelconque des revendications 1 à 4, **caractérisé en ce qu'**un plan équatorial du pneu coupe la deuxième section (2).

6. Pneu de véhicule selon l'une quelconque des revendications 1 à 5, **caractérisé en ce que** le pneu de véhicule comprend une bande de roulement (4a, 4b) à base d'un mélange de caoutchouc non électriquement conducteur, un canal électriquement conducteur (5) s'étendant radialement à travers la bande de roulement (4a, 4b).

7. Pneu de véhicule selon la revendication 6, **caractérisé en ce que** le canal électriquement conducteur (5) est en contact de manière électriquement conductrice avec la deuxième section (2) du bandage d'enroulement (10).

8. Pneu de véhicule selon l'une quelconque des revendications 1 à 7, **caractérisé en ce que** la deuxième section (2) présente une largeur axiale comprise entre 1% et 60% d'une largeur axiale du pneu de véhicule et de préférence comprise entre 1% et 30% de la largeur axiale du pneu de véhicule.

9. Pneu de véhicule selon l'une quelconque des revendications 1 à 8, **caractérisé en ce que** les bandes de matériau (6) utilisées pour le bandage d'enroulement (10) ont une largeur de 5 mm à 50 mm et/ou **en ce que** le bandage d'enroulement (10) comprend des monocordes enrobés de caoutchouc et enroulés.

10. Pneu de véhicule selon l'une quelconque des revendications 1 à 9, **caractérisé en ce que** le bandage d'enroulement (10) est respectivement enroulé, dans la première et dans la deuxième section (1, 2), sensiblement en une seule couche et en spirale, la deuxième section (2) étant enroulée sur 0,5 à 20, et de préférence sur 1 à 10 tours.

11. Procédé pour la fabrication d'un bandage de ceinture dans un pneu de véhicule, dans lequel une carcasse de ceinture (7) ainsi qu'une première et une deuxième longueur à enrouler (8, 9) pour former un bandage d'enroulement (10) sont préparées, les longueurs à enrouler (8, 9) comprenant des renforts noyés dans des mélanges de caoutchouc, une première section (1) du bandage d'enroulement (10) étant enroulée à partir de la première longueur à enrouler (8) sur la carcasse de ceinture (7), le mélange de caoutchouc de la première longueur à enrouler (8) n'étant pas électriquement conducteur,
**caractérisé en ce que**
une deuxième section (2) du bandage d'enroulement (10) est enroulée à partir de la deuxième longueur à enrouler (9) sur la carcasse de ceinture (7), le mélange de caoutchouc de la deuxième longueur à enrouler (9) étant électriquement conducteur.

12. Procédé selon la revendication 11, **caractérisé en ce que** la première longueur à enrouler (8) est enroulée par une première tête d'enroulement et la deuxième longueur à enrouler (9) est enroulée par une deuxième tête d'enroulement.

13. Procédé selon l'une quelconque des revendications 11 ou 12, dans lequel une troisième section (3) du bandage d'enroulement (10) et/ou une quatrième section (23) du bandage d'enroulement (10) est en outre enroulée à partir de la première longueur à enrouler (8).

14. Procédé selon les revendications 12 et 13, le procédé étant subdivisé en les étapes suivantes :
i) la première section (1) du bandage d'enroulement (10) est enroulée ;
ii) la première longueur à enrouler (8) est sectionnée ;
iii) la première tête d'enroulement est déplacée axialement sur une distance égale à la largeur de l'espace par rapport à un bord axial de la première section (1) ;
iv) en partant de la position réglée à l'étape iii), la troisième section (3) du bandage d'enroulement (10) est enroulée ;
v) la deuxième section (2) du bandage d'enroulement (10) est enroulée entre la première et la troisième section (1, 3) sur la largeur de l'espace.

15. Procédé selon les revendications 12 et 13, le procédé étant subdivisé en les étapes suivantes :
i) la première section (1) du bandage d'enroulement (10) est enroulée depuis un premier épaulement du pneu jusqu'à une première position axiale (24) ;
ii) la quatrième section (23) du bandage d'enroulement (10) est enroulée à partir de la première longueur à enrouler (8) entre la première position axiale (24) et une deuxième position axiale (25) de telle manière que, dans une surface délimitée par la direction axiale et circonférentielle entre la première et la deuxième position axiale, il subsiste des espaces non couverts par la quatrième section (23) ;
iii) la troisième section (3) est enroulée à partir de la première longueur à enrouler (8) entre la deuxième position axiale (25) et un deuxième épaulement du pneu ;
selon une première variante, avant les étapes i) à iii), la deuxième section (2) est enroulée sur la carcasse de ceinture (7) entre la première et la deuxième position axiale (24, 25) ;
selon une deuxième variante, après les étapes i) à iii), la deuxième section (2) est enroulée entre la première et la deuxième position axiale (24, 25) à partir de la deuxième longueur à enrouler (9) sur la carcasse de ceinture (7) et sur la quatrième section (23) du bandage d'enroulement (10).
